# EUROPEAN PATENT APPLICATION

(11) **EP 4 831 037 A1**
(43) Date of publication of application: **28.10.2026**
(21) Application number: 23961694.9
(22) Date of filing: 19.12.2023
(51) Int. Cl.: B62D 6/00, B62D 5/04

(54) **STEERING CONTROL DEVICE AND STEERING CONTROL METHOD**

(71) Applicant: JTEKT CORPORATION, Kariya-shi, Aichi 448-8652 (JP)
(72) Inventor: TAMAIZUMI, Terutaka, Kariya-shi, Aichi 448-8652 (JP); INDEN, Yuki, Kariya-shi, Aichi 448-8652 (JP); YAMAUCHI, Izumi, Kariya-shi, Aichi 448-8652 (JP)
(74) Representative: Winter, Brandl - Partnerschaft mbB
(86) International application number: PCT/JP2023/045544
(87) International publication number: WO 2025/134237

(57) **Abstract**

The steering control device (70, 90) executes a target steering wheel angle calculation process, a lower-side angle acquisition process, a steering-side feedback process, a reaction force operation process, and a compensation process. The target steering wheel angle calculation process is a process of calculating a target steering wheel angle. The lower-side angle acquisition process is a process of acquiring a lower-side angle that is an angle of a steering shaft on the opposite side of a torsion bar from a steering wheel. The steering-side feedback process is a process of calculating a manipulated variable of feedback control in which the lower-side angle is a controlled variable and the target steering wheel angle is a target value of the controlled variable. The reaction force operation process is a process of controlling torque of a reaction force motor according to the manipulated variable. The compensation process is a process of correcting, by a compensation amount corresponding to a detection value of steering torque detected as a value corresponding to twisting of the torsion bar, the manipulated variable that is an input to the reaction force operation process.

## Description

### TECHNICAL FIELD

The present disclosure relates to steering control devices and steering control methods.

### BACKGROUND ART

For example, Patent Document 1 listed below describes a device in which an assist motor is provided at a steering shaft on the opposite side of a torsion bar from a steering wheel. A control device that controls this device controls the torque of the assist motor to assist the driver in rotating the steering wheel. The control device sets the torque of the assist motor by feedback control that uses, as a controlled variable, a pinion angle based on the rotation angle of the assist motor.

Patent Document 2 listed below describes a control device that executes control to apply a reaction torque to a steering wheel in a state in which power transmission between the steering wheel and steered wheels is cut off. Specifically, the control device controls the torque of a reaction force motor to control a reaction torque that opposes a rotational force applied by the driver to the steering wheel.

### Related Art Documents

### Patent Documents

Patent Document 1: Japanese Unexamined Patent Application Publication No. 2017-154698 (JP 2017-154698 A)
Patent Document 2: Japanese Unexamined Patent Application Publication No. 2018-52205 (JP 2018-52205 A)

### SUMMARY OF THE INVENTION

### Problem to be Solved by the Invention

The inventors considered including, in control of the torque of the reaction force motor, feedback control in which a rotation angle is a controlled variable. However, when the rotation angle of the reaction force motor is used as a controlled variable as in Patent Document 1, this means controlling a rotation angle that is different from the rotation angle of the steering wheel, which is the rotation angle perceived by the driver.

### Means for Solving the Problem

One aspect of the present disclosure provides a steering control device configured to control a steering device. The steering device includes a steering shaft provided with a torsion bar, a steering wheel connected to the steering shaft on a first side relative to the torsion bar, a reaction force motor configured to apply torque to the steering shaft on a second side relative to the torsion bar, the second side being opposite to the first side, and a steered wheel. The steering control device is configured to execute a target steering wheel angle calculation process, a lower-side angle acquisition process, a steering-side feedback process, a reaction force operation process, and a compensation process in a state in which power transmission between the steering shaft and the steered wheel is cut off. The target steering wheel angle calculation process is a process of calculating a target steering wheel angle. The target steering wheel angle is a target value of a steering wheel angle that is a rotation angle of the steering wheel. The lower-side angle acquisition process is a process of acquiring a lower-side angle that is an angle of the steering shaft on the second side. The steering-side feedback process is a process of calculating a manipulated variable of feedback control in which the lower-side angle is a controlled variable and the target steering wheel angle is a target value of the controlled variable. The reaction force operation process is a process of controlling torque of the reaction force motor according to the manipulated variable. The compensation process is a process of correcting, by a compensation amount corresponding to a detection value of steering torque detected as a value corresponding to twisting of the torsion bar, the manipulated variable that is an input to the reaction force operation process.

Another aspect of the present disclosure provides a steering control method for controlling a steering device. The steering device includes a steering shaft provided with a torsion bar, a steering wheel connected to the steering shaft on a first side relative to the torsion bar, a reaction force motor configured to apply torque to the steering shaft on a second side relative to the torsion bar, the second side being opposite to the first side, and a steered wheel. The steering control device is configured to execute a target steering wheel angle calculation process, a lower-side angle acquisition process, a steering-side feedback process, a reaction force operation process, and a compensation process in a state in which power transmission between the steering shaft and the steered wheel is cut off. The target steering wheel angle calculation process is a process of calculating a target steering wheel angle. The target steering wheel angle is a target value of a steering wheel angle that is a rotation angle of the steering wheel. The lower-side angle acquisition process is a process of acquiring a lower-side angle that is an angle of the steering shaft on the second side. The steering-side feedback process is a process of calculating a manipulated variable of feedback control in which the lower-side angle is a controlled variable and the target steering wheel angle is a target value of the controlled variable. The reaction force operation process is a process of controlling torque of the reaction force motor according to the manipulated variable. The compensation process is a process of correcting, by a compensation amount corresponding to a detection value of steering torque detected as a value corresponding to twisting of the torsion bar, the manipulated variable that is an input to the reaction force operation process.

### BRIEF DESCRIPTION OF THE DRAWINGS

[FIG. 1] FIG. 1 is a diagram showing the configuration of a vehicle according to a first embodiment.
[FIG. 2] FIG. 2 is a block diagram showing part of processing executed by a steering-side ECU and a steered-side ECU shown in FIG. 1.
[FIG. 3] FIG. 3 is a flowchart showing the procedure of a process executed by a steering ECU according to a second embodiment.
[FIG. 4] FIG. 4 is a block diagram showing part of processing executed by the steering-side ECU and the steered-side ECU shown in FIG. 1.
[FIG. 5] FIG. 5 is a flowchart showing the procedures of a process executed by the steered-side ECU shown in FIG. 1.
[FIG. 6] FIG. 6 is a block diagram showing part of processing executed by the steering-side ECU and the steered-side ECU shown in FIG. 1.
[FIG. 7] FIG. 7 is a flowchart showing the procedures of a process executed by the steered-side ECU shown in FIG. 1.

### MODES FOR CARRYING OUT THE INVENTION

### <First Embodiment>

Hereinafter, a first embodiment will be described with reference to the drawings.

### "Prerequisite Configuration"

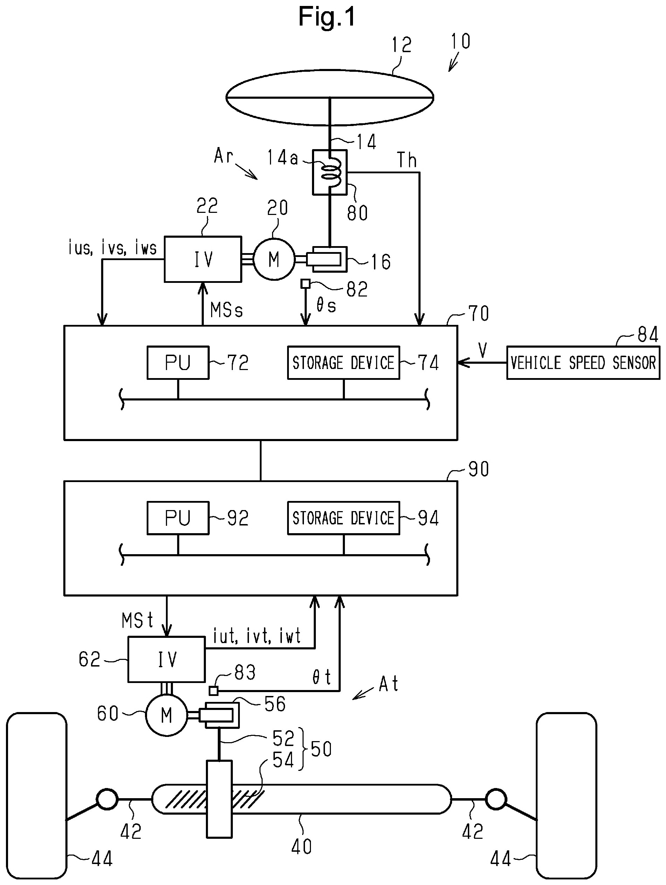

As shown in FIG. 1, a steering device 10 of a vehicle is a steer-by-wire steering device. The steering device 10 includes a reaction force actuator Ar and a steered-side actuator At. The steering device 10 of the present embodiment has a structure in which a power transmission path between a steering wheel 12 and steered wheels 44 is mechanically disconnected at all times.

A steering shaft 14 is connected to the steering wheel 12. The steering shaft 14 is provided with a torsion bar 14a. One of both sides of the steering shaft 14 across the torsion bar 14a is a first side, and the other is a second side. The steering wheel 12 is connected to the first side of the steering shaft 14. The reaction force actuator Ar is an actuator that applies a steering reaction force to the steering wheel 12. The steering reaction force refers to a force acting in a direction opposite to a direction in which the steering wheel 12 is operated by a driver. By applying the steering reaction force to the steering wheel 12, an appropriate steering feel can be provided to the driver. The reaction force actuator Ar includes a speed reduction mechanism 16, a reaction force motor 20, and a reaction force inverter 22.

The reaction force motor 20 is a three-phase brushless motor. A rotary shaft of the reaction force motor 20 is connected to the second side of the steering shaft 14 via the speed reduction mechanism 16. A steered shaft 40 extends along a vehicle width direction, which is a left-right direction in FIG. 1. The right and left steered wheels 44 are respectively connected to both ends of the steered shaft 40 via respective tie rods 42. The steered angle of the steered wheels 44 changes as the steered shaft 40 moves linearly.

The steered-side actuator At includes a speed reduction mechanism 56, a steered-side motor 60, and a steered-side inverter 62. The steered-side motor 60 is a three-phase brushless motor. The steered-side motor 60 is, for example, a surface permanent magnet synchronous motor. A rotary shaft of the steered-side motor 60 is connected to a pinion shaft 52 via the speed reduction mechanism 56. Pinion teeth of the pinion shaft 52 mesh with rack teeth 54 of the steered shaft 40. The pinion shaft 52 and the steered shaft 40 on which the rack teeth 54 are formed constitute a rack and pinion mechanism 50. Torque of the steered-side motor 60 is applied, as a steering force, to the steered shaft 40 via the pinion shaft 52. The steered shaft 40 moves along the vehicle width direction, which is the left-right direction in FIG. 1, in accordance with rotation of the steering motor 60.

The steering device 10 includes a reaction force ECU 70 and a steered-side ECU 90. The reaction force ECU 70 includes a PU 72 and a storage device 74. The PU 72 is a software processing device such as a CPU or a GPU. The storage device 74 may be an electrically non-rewritable nonvolatile memory. Alternatively, the storage device 74 may be an electrically rewritable nonvolatile memory or a storage medium such as a disk medium. The reaction force ECU 70 controls a controlled variable by the PU 72 executing a program stored in the storage device 74.

A controlled object of the reaction force ECU 70 is the steering wheel 12. The reaction force ECU 70 operates the reaction force actuator Ar to control a steering reaction force that is a controlled variable for the controlled object. FIG. 1 shows an operation signal MSs for the reaction force inverter 22.

To control the controlled variable, the reaction force ECU 70 refers to a steering torque Th, which is an input torque to the steering shaft 14 and is detected by a torque sensor 80. The torque sensor 80 is a sensor that detects the steering torque Th in accordance with twisting of the torsion bar 14a. The reaction force ECU 70 also refers to a rotation angle θs of the rotary shaft of the reaction force motor 20 detected by a rotation angle sensor 82. The reaction force ECU 70 also refers to a vehicle speed V detected by a vehicle speed sensor 84. The reaction force ECU 70 also refers to currents ius, ivs, iws flowing through the reaction force motor 20. The currents ius, ivs, iws are quantified as voltage drops across shunt resistors provided in respective legs of the reaction force inverter 22.

The steered-side ECU 90 includes a PU 92 and a storage device 94. The PU 92 is a software processing device such as a CPU or a GPU. The storage device 94 may be an electrically non-rewritable nonvolatile memory. Alternatively, the storage device 94 may be an electrically rewritable nonvolatile memory or a storage medium such as a disk medium. The steered-side ECU 90 controls a controlled variable by the PU 92 executing a program stored in the storage device 94.

A controlled object of the steered-side ECU 90 is the steered wheels 44. The steered-side ECU 90 operates the steered-side actuator At to control the steered angle of the steered wheels 44 that is a controlled variable for the controlled object. FIG. 1 shows an operation signal MSt for the steered-side inverter 62.

To control the controlled variable, the steered-side ECU 90 refers to a rotation angle θt of the rotary shaft of the steered-side motor 60 detected by a rotation angle sensor 83. The steered-side ECU 90 also refers to currents iut, ivt, iwt flowing through the steered-side motor 60. The currents iut, ivt, iwt are quantified as voltage drops across shunt resistors provided in respective legs of the steered-side inverter 62.

### "Control"

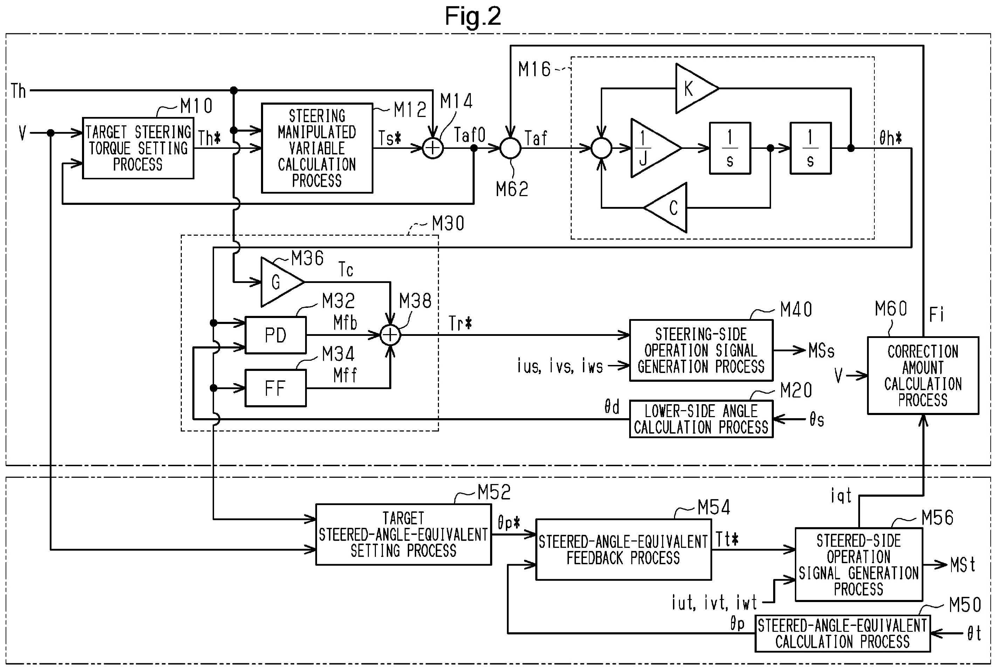

FIG. 2 shows processes executed by the reaction force ECU 70 and the steered-side ECU 90. The processes surrounded by a long dashed short dashed line in FIG. 2 are implemented by the PU 72 repeatedly executing, for example, at predetermined intervals, a program stored in the storage device 74. The processes surrounded by a long dashed double-short dashed line in FIG. 2 are implemented by the PU 92 repeatedly executing, for example, at predetermined intervals, a program stored in the storage device 94.

A target steering torque setting process M10 is a process of calculating a target steering torque Th*, which is a target value of the steering torque Th, based on an axial force Taf0 as an input variable. The axial force Taf0 is a variable that simulates a force applied to the steered shaft 40 under the assumption that power transmission between the steering wheel 12 and the steered shaft 40 is possible. However, the axial force Taf0 is a quantity converted into a torque of the steering shaft 14. The target steering torque setting process M10 includes a process of setting the target steering torque Th* to different values according to a vehicle speed V even when the axial force Taf0 is the same. This setting aims to allow the driver to experience an optimal steering feel according to the vehicle speed V.

A steering manipulated variable calculation process M12 is a process of calculating a steering manipulated variable Ts*, which is a manipulated variable of control in which the steering torque Th is a controlled variable. The steering manipulated variable calculation process M12 includes a process of calculating a manipulated variable of feedback control in which the steering torque Th is a controlled variable and the target steering torque Th* is a target value of the controlled variable, and thus calculates the steering manipulated variable Ts* according to the manipulated variable. The steering manipulated variable calculation process M12 may further include a process of calculating a manipulated variable of open-loop control in which the target steering torque Th* is a target value of the controlled variable, and thus calculate the steering manipulated variable Ts* according to the manipulated variable. For example, in a case where both the steering torque Th and the target steering torque Th* have positive signs, the manipulated variable for feedback control is a quantity for reducing the absolute value of a requested torque for the reaction force motor 20 when the steering torque Th is larger than the target steering torque Th*. The steering manipulated variable Ts* is, as one example, a quantity converted into a torque applied to the steering shaft 14.

An axial force calculation process M14 is a process of calculating the axial force Taf0 by adding the steering torque Th to the steering manipulated variable Ts*. A correction process M62 is a process of assigning, to an axial force Taf, a value obtained by adding a correction amount Fi to the axial force Taf0.

A reference model calculation process M16 is a process of calculating a target steering wheel angle θh*, which is a target value of a steering wheel angle θh, based on the axial force Taf as an input variable. More specifically, the reference model calculation process M16 is a process of calculating the target steering wheel angle θh* using an equation obtained by replacing the steering wheel angle θh in a model equation represented by Expression (c1) below with the target steering wheel angle θh*. $Taf = K ⋅ θh + C ⋅ θh ′ + J ⋅ θh "$ (c1) The model represented by Expression (c1) represents a value taken by the steering wheel angle θh when a torque equal in magnitude to the axial force Taf is input to the steering shaft 14. The steering wheel angle θh is a variable indicating a rotation angle of the steering shaft 14.

In Expression (c1), a damping coefficient C models friction etc. of the steering device 10. An inertia coefficient J models inertia of the steering device 10. A stiffness coefficient K models specifications such as a suspension and wheel alignment of a vehicle in which the steering device 10 is mounted. This model need not accurately represent the actual steering device 10 or the vehicle in which the steering device 10 is mounted. This model may be a reference model designed such that the behavior of the steering wheel angle with respect to an input becomes an ideal behavior. When a reference model is adopted, the steering feel can be adjusted through design of the reference model.

A lower-side angle calculation process M20 is a process of calculating a lower-side angle θd based on a rotation angle θs as an input variable. The lower-side angle θd is a rotation angle of the steering shaft 14 on the opposite side of the torsion bar 14a from the steering wheel 12. The lower-side angle calculation process M20 includes a process of integrating the rotation angle θs. The integration process includes a process of setting the lower-side angle θd to zero at a neutral position.

A target reaction torque calculation process M30 is a process of calculating a target reaction torque Tr* based on the lower-side angle θd and the target steering wheel angle θh* as input variables. The target reaction torque calculation process M30 includes a steering-side feedback process M32 that calculates a steering-side feedback manipulated variable Mfb, which is a manipulated variable of feedback control in which the lower-side angle θd is a controlled variable and the target steering wheel angle θh* is a target value of the controlled variable. The steering-side feedback manipulated variable Mfb is the sum of respective output values of a proportional element and a derivative element, each receiving as an input the difference between the target steering wheel angle θh* and the lower-side angle θd. The target reaction torque calculation process M30 includes an open-loop manipulated variable calculation process M34 that calculates an open-loop manipulated variable Mff, which is a manipulated variable of open-loop control in which the target steering wheel angle θh* is a target value of the controlled variable. The target reaction torque calculation process M30 includes a compensation process M36 that is a process of assigning, to a compensation amount Tc, a value obtained by multiplying the steering torque Th by a gain G. The gain G is positive. The compensation amount Tc will be described in detail later. The target reaction torque calculation process M30 includes an addition process M38 that assigns, to the target reaction torque Tr*, the sum of the steering-side feedback manipulated variable Mfb, the open-loop manipulated variable Mff, and the compensation amount Tc.

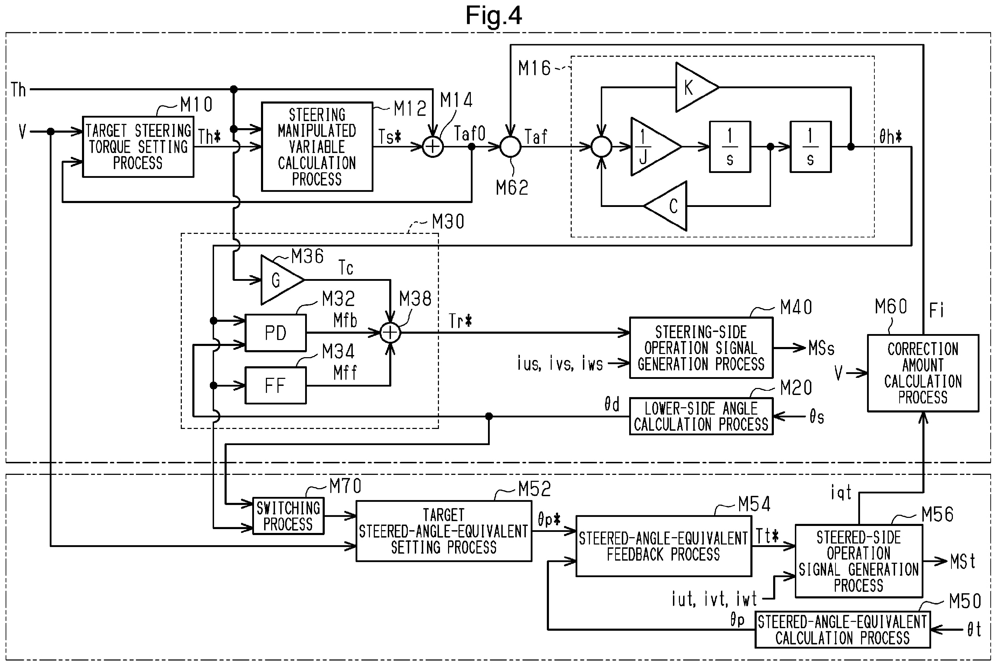

A steering-side operation signal generation process M40 is a process of operating the reaction force inverter 22 based on the target reaction torque Tr* as an input variable. The steering-side operation signal generation process M40 includes a process of calculating a manipulated variable of control in which the torque of the reaction force motor 20 is a controlled variable and the target reaction torque Tr* is a target value of the controlled variable. The rotation angle θs and the currents ius, ivs, iws are referred to when calculating the manipulated variable. The steering-side operation signal generation process M40 further includes a process of operating the reaction force inverter 22 according to the manipulated variable. FIG. 4 shows an operation signal MSs of the reaction force inverter 22. In practice, the operation signal MSs is an individual operation signal for each switching element of the reaction force inverter 22.

A target steered-angle-equivalent setting process M52 is a process of calculating a target steered-angle-equivalent θp* based on the target steering wheel angle θh* and the vehicle speed V as input variables. The PU 92 changes the target steered-angle-equivalent θp* according to the target steering wheel angle θh* under a condition that the absolute value of the target steered-angle-equivalent θp* when the absolute value of the target steering wheel angle θh* is large is greater than or equal to the absolute value of the target steered-angle-equivalent θp* when the absolute value of the target steering wheel angle θh* is small.

In the description "changing B according to A under a condition that B when A is large is greater than or equal to B when A is small," the expressions "A is large" and "A is small" indicate a relative magnitude relationship when the two are compared. For example, "A is large" corresponds to a case where "A is a first value," and "A is small" corresponds to a case where "A is a second value smaller than the first value." The above description means that, depending on the settings of the first value and the second value, B when A is the first value may be larger than B when A is the second value. This description also means that B is changed according to A such that A when B is large becomes larger than A when B is small.

A steered-angle-equivalent feedback process M54 is a process of calculating a target steered-side torque Tt* based on the steered-angle-equivalent θp and the target steered-angle-equivalent θp* as input variables. The target steered-side torque Tt* is a quantity corresponding to a manipulated variable of feedback control in which the steered-angle-equivalent θp is a controlled variable and the target steered-angle-equivalent θp* is a target value of the controlled variable.

A steered-side operation signal generation process M56 is a process of operating the steered-side inverter 62 based on the target steered-side torque Tt* as an input variable. The steered-side operation signal generation process M56 may be a process of calculating a manipulated variable of control in which the torque of the steered-side motor 60 is a controlled variable and a value obtained by converting the target steered-side torque Tt* into the torque of the steered-side motor 60 is a target value of the controlled variable. The rotation angle θt and the currents iut, ivt, iwt are referred to when calculating the manipulated variable. The steered-side operation signal generation process M56 includes a process of operating the steered-side inverter 62 according to the manipulated variable. FIG. 2 shows an operation signal MSt for the steered-side inverter 62. In practice, the operation signal MSt is an individual operation signal for each switching element of the steered-side inverter 62.

A correction amount calculation process M60 is a process of calculating a correction amount Fi based on a q-axis current iqt and the vehicle speed V as input variables. The correction amount Fi is a quantity for transmitting state information of the steered wheels 44 to the steering wheel 12. The q-axis current iqt is a q-axis current of the steered-side motor 60. The q-axis current iqt is calculated by the PU 92 based on the currents iut, ivt, iwt and the rotation angle θt. The q-axis current iqt is a physical quantity indicating the state of the steered wheels 44, such as a force applied to the steered wheels 44.

### <Functions and Effects of Embodiment>

The PU 72 calculates the target steering wheel angle θh* by the reference model calculation process M16. The target steering wheel angle θh* is a target value of the steering wheel angle θh, which is a rotation angle of the steering wheel 12. In other words, it is a target value of the steering wheel angle θh perceived by the driver. According to control in which the target steering wheel angle θh* is a target value of the controlled variable, the steering wheel angle θh perceived by the driver can be controlled as desired.

A manipulated variable of control in which the target steering wheel angle θh* is a target value of the controlled variable is the target reaction torque Tr*. The target reaction torque Tr* is generated by the reaction force motor 20. The reaction force motor 20 applies torque to the steering shaft 14 on the opposite side of the torsion bar 14a from the steering wheel 12. Behavior of the steering wheel angle θh when torque is applied to the torsion bar 14a is difficult to predict due to twisting of the torsion bar 14a. Therefore, if the torque of the reaction force motor 20 is controlled by a manipulated variable of feedback control in which the steering wheel angle θh is a controlled variable and the target steering wheel angle θh* is a target value of the controlled variable, it is difficult to cause the steering wheel angle θh to follow the target steering wheel angle θh*. As a result, vibration tends to occur in the steering wheel angle θh.

In contrast, when the torque of the reaction force motor 20 is controlled by a manipulated variable of feedback control in which the lower-side angle θd is a controlled variable and a target value of the lower-side angle θd is a target value of the controlled variable, feedback control can be performed appropriately. This is because whether to increase or decrease the torque of the reaction force motor 20 is uniquely determined depending on whether the lower-side angle θd is deflected toward a right-turn side or toward a left-turn side. However, since the lower-side angle θd and the steering wheel angle θh generally do not coincide due to twisting of the torsion bar 14a, the lower-side angle θd is not an angle directly perceived by the driver.

Therefore, the PU 72 sets the target reaction torque Tr* according to the steering-side feedback manipulated variable Mfb, which is a manipulated variable of feedback control in which the lower-side angle θd is a controlled variable and the target steering wheel angle θh* is a target value of the controlled variable. The PU 72 superposes the compensation amount Tc on the target reaction torque Tr* to compensate for the responsiveness of the steering wheel angle θh relative to the target steering wheel angle θh*. As a result, even when the steering-side feedback manipulated variable Mfb using the lower-side angle θd as the controlled variable is adopted, controllability of the steering wheel angle θh to the target steering wheel angle θh* can be improved.

The above embodiment further has the following functions and effects. (1-1) The PU 92 sets the target steered-angle-equivalent θp* according to the target steering wheel angle θh*. In other words, the PU 92 sets the target steered-angle-equivalent θp* according to the target value of the steering wheel angle θh perceived by the driver. As a result, the steered angle of the steered wheels 44 can be set according to the steering wheel angle θh that can be perceived by the driver.

### <Second Embodiment>

A second embodiment will now be described with reference to the drawings, focusing on differences from the first embodiment.

In the present embodiment, when stability of feedback control using the target steering wheel angle θh* as a target value of the controlled variable decreases, control is switched to feedback control using a target value of the lower-side angle θd as a target value of the controlled variable.

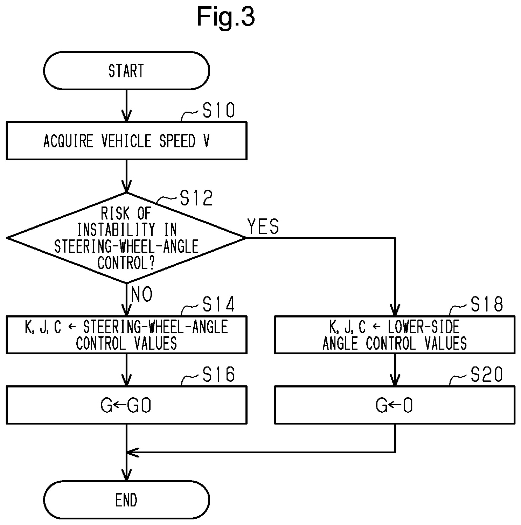

FIG. 3 shows the procedure of a process related to the above switching. The series of processes shown in FIG. 3 is implemented by the PU 72 repeatedly executing, for example, at predetermined intervals, a program stored in the storage device 74. In the following description, step numbers in each process are denoted by numerals preceded by "S."

In the series of processes shown in FIG. 3, the PU 72 first acquires the vehicle speed V (S10). Next, the PU 72 determines, according to the vehicle speed V, whether there is a risk that feedback control using the target steering wheel angle θh as a target value of the controlled variable may become unstable (S12). When it is determined that there is no risk that the feedback control may become unstable (S12: NO), the PU 12 assigns, to defining parameters that define a predetermined model in the reference model calculation process M16, values for setting the target steering wheel angle θh (S14). That is, the PU 12 assigns values for setting the target steering wheel angle θh* to the stiffness coefficient K, the inertia coefficient J, and the damping coefficient C. The values for setting the target steering wheel angle θh* are the values of the stiffness coefficient K, inertia coefficient J, and damping coefficient C in the first embodiment. The PU 72 then assigns a steering-wheel-angle control setting value G0 to the gain G (S16). The steering-wheel-angle control setting value G0 is a positive value.

On the other hand, when it is determined that there is a risk that the feedback control may become unstable (S12: YES), the PU 72 assigns, to defining parameters that define a predetermined model in the reference model calculation process M16, values for setting a target value of the lower-side angle θd (S18). That is, the PU 72 assigns values for setting a target value of the lower-side angle θd to the stiffness coefficient K, the inertia coefficient J, and the damping coefficient C. The PU 72 then assigns zero to the gain G (S20). The process of S20 is a stop process of stopping the compensation process M36.

Accordingly, the reference model calculation process M16 is changed to a process of calculating a target value of the lower-side angle θd based on the axial force Taf as an input variable. Further, the steering-side feedback process M32 is changed to a process of assigning, to the steering-side feedback manipulated variable Mfb, a manipulated variable of feedback control in which the lower-side angle θd is a controlled variable and the target value of the lower-side angle θd is a target value of the controlled variable.

When the process of S16 or S20 is completed, the PU 72 temporarily terminates the series of processes shown in FIG. 3. The processes of S12, S14, and S18 constitute a steering-side switching process.

### <Third Embodiment>

A third embodiment will now be described with reference to the drawings, focusing on differences from the second embodiment.

FIG. 4 shows processes executed by the reaction force ECU 70 and the steered-side ECU 90. The processes surrounded by a long dashed short dashed line in FIG. 4 are implemented by the PU 72 repeatedly executing, for example, at predetermined intervals, a program stored in the storage device 74. The processes surrounded by a long dashed double-short dashed line in FIG. 4 are implemented by the PU 92 repeatedly executing, for example, at predetermined intervals, a program stored in the storage device 94. In FIG. 4, the processes corresponding to those shown in FIG. 2 are denoted by the same signs as those in FIG. 2 for convenience.

A switching process M70 shown in FIG. 4 receives the target steering wheel angle θh* and the lower-side angle θd as inputs. The switching process M70 is a process of selectively inputting either the target steering wheel angle θh* or the lower-side angle θd to the target steered-angle-equivalent setting process M52.

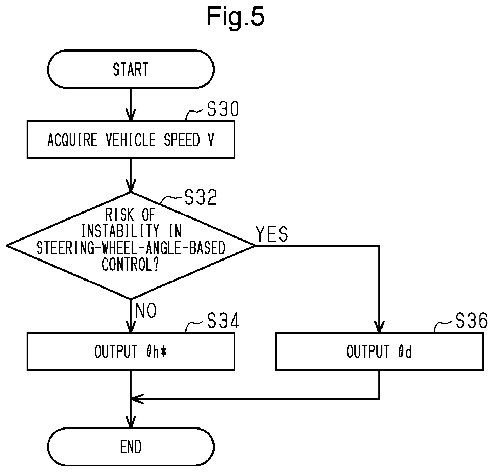

FIG. 5 shows the procedure of the switching process M70. The process shown in FIG. 5 is implemented by the PU 92 repeatedly executing, for example, at predetermined intervals, a program stored in the storage device 94. In the series of processes shown in FIG. 5, the PU 92 first acquires the vehicle speed V (S30). Next, the PU 92 determines whether there is a risk that control using the target steered-angle-equivalent θp* set according to the target steering wheel angle θh* may become unstable (S32). When it is determined that there is no risk that the control may become unstable (S32: NO), the PU 92 outputs the target steering wheel angle θh* to the target steered-angle-equivalent setting process M52 (S34). In this case, as in the second embodiment, the target steered-angle-equivalent setting process M52 is a process of calculating the target steered-angle-equivalent θp* based on the target steering wheel angle θh* and the vehicle speed V as input variables.

On the other hand, when it is determined that there is a risk that the control may become unstable (S32: YES), the PU 92 outputs the lower-side angle θd to the target steered-angle-equivalent setting process M52 (S36). In this case, the target steered-angle-equivalent setting process M52 is changed to a process of calculating the target steered-angle-equivalent θp* based on the lower-side angle θd and the vehicle speed V as input variables.

When the process of S34 or S36 is completed, the PU 92 temporarily terminates the series of processes shown in FIG. 5. The processes of S32 to S36 constitute a steered-side switching process.

### <Fourth Embodiment>

A fourth embodiment will now be described with reference to the drawings, focusing on differences from the third embodiment.

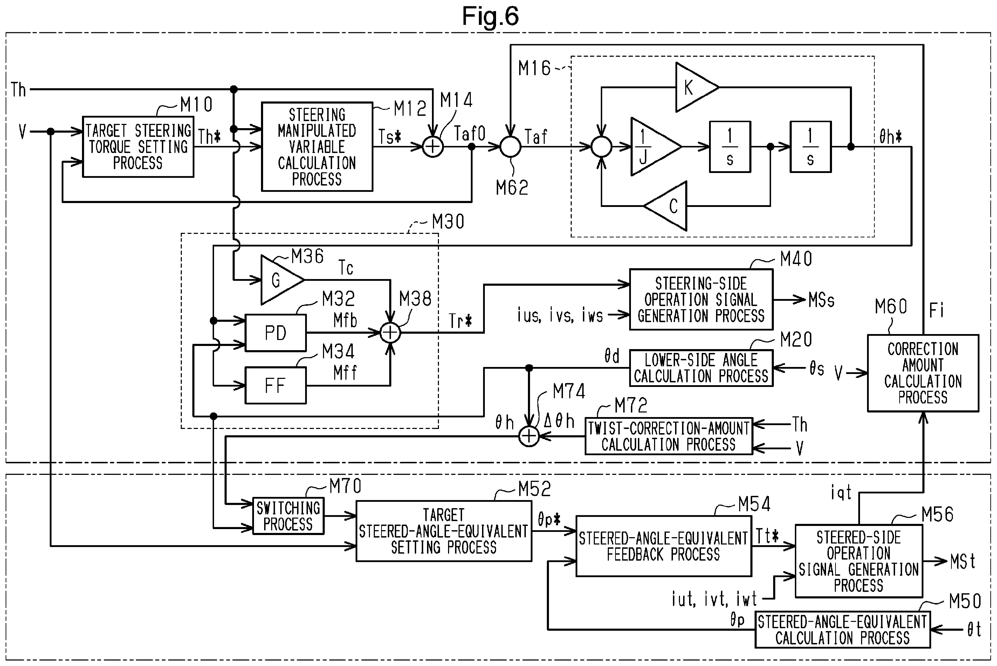

FIG. 6 shows processes executed by the reaction force ECU 70 and the steered-side ECU 90. The processes surrounded by a long dashed short dashed line in FIG. 6 are implemented by the PU 72 repeatedly executing, for example, at predetermined intervals, a program stored in the storage device 74. The processes surrounded by a long dashed double-short dashed line in FIG. 6 are implemented by the PU 92 repeatedly executing, for example, at predetermined intervals, a program stored in the storage device 94. In FIG. 6, the processes corresponding to those shown in FIG. 4 are denoted by the same signs as those in FIG. 4 for convenience.

A twist-correction-amount calculation process M72 shown in FIG. 6 is a process of calculating a twist correction amount Δθh based on the steering torque Th and the vehicle speed V as input variables. The twist correction amount Δθh is an estimated value of the twist angle of the torsion bar 14a.

A steering-wheel-angle calculation process M74 is a process of calculating the steering wheel angle θh by adding the twist correction amount Δθh to the lower-side angle θd. The steering wheel angle θh according to the present embodiment is an estimated value of the rotation angle of the steering wheel 12.

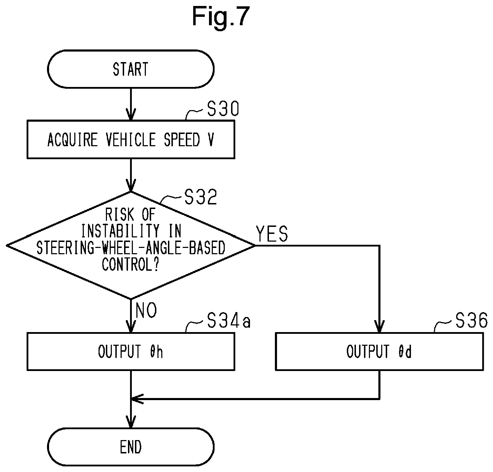

The switching process M70 selectively inputs either the steering wheel angle θh or the lower-side angle θd to the target steered-angle-equivalent setting process M52. FIG. 7 shows the procedure of the switching process M70. The process shown in FIG. 7 is implemented by the PU 92 repeatedly executing, for example, at predetermined intervals, a program stored in the storage device 94. In FIG. 7, the processes corresponding to those shown in FIG. 5 are denoted by the same step numbers as those in FIG. 5 for convenience.

In the series of processes shown in FIG. 7, when a negative determination is made in the process of S32, the PU 92 outputs the steering wheel angle θh to the target steered-angle-equivalent setting process M52 (S34a). In this case, the target steered-angle-equivalent setting process M52 is a process of calculating the target steered-angle-equivalent θp* based on the steering wheel angle θh and the vehicle speed V as input variables.

When the process of S34a is completed, the PU 92 temporarily terminates the series of processes shown in FIG. 7. The processes of S32, S34a, and S36 constitute a steered-side switching process.

### <Other Embodiments>

The above embodiments can be modified as follows. The above embodiments and the following modifications can be combined with each other as long as no technical contradictions arise.

### "Regarding Compensation Process"

- The compensation process is not limited to the process of assigning, to the compensation amount Tc, a value obtained by multiplying the steering torque Th by the gain G. For example, the compensation process may be a process in which, with map data stored in the storage device 74, the PU 72 calculates the compensation amount Tc according to the steering torque Th by map calculation. The map data is data in which the steering torque Th is an input variable and the compensation amount Tc is an output variable.

The map data refers to a data set including discrete values of an input variable and values of an output variable corresponding to the values of the input variable. The map calculation may be a process in which, when the value of the input variable matches one of the values of the input variable in the map data, the corresponding value of the output variable in the map data is used as a calculation result. The map calculation may be a process in which, when the value of the input variable does not match any of the values of the input variable in the map data, a value obtained by interpolation of a plurality of values of the output variable included in the map data is used as a calculation result. Alternatively, the map calculation may be a process in which, when the value of the input variable does not match any of the values of the input variable in the map data, the value of the output variable in the map data corresponding to the closest value among the plurality of values of the input variable in the map data is used as a calculation result.

### "Regarding Steering-Side Feedback Process"

- The steering-side feedback process is not limited to the process of assigning, to the steering-side feedback manipulated variable Mfb, the sum of an output value of a proportional element and an output value of a derivative element. For example, the steering-side feedback process may be a process of assigning, to the steering-side feedback manipulated variable Mfb, the sum of the sum of an output value of a proportional element and an output value of a derivative element, and an output value of a disturbance observer. Alternatively, for example, the steering-side feedback process may be a process of calculating the steering-side feedback manipulated variable Mfb using an integral element in addition to a proportional element and a derivative element. The steering-side feedback process need not be a process of calculating the steering-side feedback manipulated variable Mfb using a proportional element and a derivative element. For example, the steering-side feedback process may be a process of calculating the steering-side feedback manipulated variable Mfb using a proportional element but without using a differential element.

### "Regarding Target Steered-Angle-Equivalent Setting Process"

- FIG. 2 illustrates an example in which an input to the target steered-angle-equivalent setting process M52 is the target steering wheel angle θh*. However, the present disclosure is not limited to this. For example, the input to the target steered-angle-equivalent setting process M52 may be the steering wheel angle θh.
- The vehicle speed V need not be included as an input to the target steered-angle-equivalent setting process.

### "Regarding Steering Wheel Angle θh"

- FIG. 6 illustrates an example of the process of estimating the steering wheel angle θh based on the steering torque Th and the vehicle speed V as input variables. However, the method for acquiring the steering wheel angle θh is not limited to this. For example, the steering wheel angle θh may be a detection value of a sensor that detects the rotation angle of the steering shaft 14 on the side closer to the steering wheel 12 than the torsion bar 14a.
- FIG. 6 illustrates an example in which the twist correction amount Δθh is an estimated value of the twist angle of the torsion bar 14a. However, the present disclosure is not limited to this. For example, the twist correction amount Δθh may be an amount artificially set according to the steering feel desired to be provided to the driver.

### "Regarding Steered-Side Switching Process"

- An input to the steered-side switching process, which is a process of switching an input variable of the target steered-angle-equivalent setting process M52, is not limited to the vehicle speed V. For example, the input may be a variable indicating the torque of the steered-side motor 60, such as the q-axis current iqt.

### "Regarding Steering-Side Switching Process"

- An input that is referred to for switching an input variable of the steering-side feedback process from the target steering wheel angle to the target lower-side angle is not limited to the vehicle speed V. For example, the input may be a variable indicating the torque of the steered-side motor 60, such as the q-axis current iqt.

### "Regarding Predetermined Model"

- The predetermined model used to calculate the target steering wheel angle according to the axial force is not limited to the model illustrated in the above embodiments. For example, the predetermined model may be a model in which one of the three coefficients, namely the stiffness coefficient K, the inertia coefficient J, and the damping coefficient C, is not included among the defining parameters that defines a model.

### "Regarding Target Steering Wheel Angle Calculation Process"

- The target steering wheel angle calculation process is not limited to the process of calculating the target steering wheel angle θh* using the reference model calculation process M16. For example, the target steering wheel angle calculation process may be a process in which, with map data stored in the storage device 74, the PU 72 calculates the target steering wheel angle θh* based on the axial force Taf by map calculation. The map data is data in which the axial force Taf is an input variable and the target steering wheel angle θh* is an output variable.

### "Regarding Axial Force Setting Process"

- The axial force Taf is not limited to a value obtained by adding the steering torque Th and the correction amount Fi to the steering manipulated variable Ts*. For example, the axial force Taf may be a value obtained by adding the steering torque Th to the steering manipulated variable Ts*.
- The axial force Taf need not be set based on a manipulated variable of feedback control in which the steering torque Th is a controlled variable and the target steering torque Th* is a target value of the controlled variable. For example, the axial force Taf may be a weighted average value of an angle axial force and a current axial force. The angle axial force may be calculated, for example, by the PU 72 according to the target steered-angle-equivalent θp* and the vehicle speed V. The current axial force may be calculated, for example, by the PU 72 according to the q-axis current iqt.

### "Regarding Reaction Force Operation Process"

- The reaction force operation process need not be constituted by the steering-side operation signal generation process M40, which includes a process of calculating a manipulated variable of control in which the torque of the reaction force motor 20 is a controlled variable and the target reaction torque Tr* is a target value of the controlled variable. For example, the reaction force operation process may be a process of controlling the torque of the reaction force motor 20 using an open-loop manipulated variable in which the target reaction torque Tr* is a target value of the controlled variable.

### "Regarding Steered-Side Feedback Process"

- The steered-side feedback process is not limited to the process constituted by the steered-angle-equivalent feedback process M54 and the steered-side operation signal generation process M56. For example, the steered-side feedback process may be a process of controlling the torque of the steered-side motor 60 according to the sum of an output value of the steered-angle-equivalent feedback process M54 and a manipulated variable of open-loop control in which the target steered-angle-equivalent θp* is a target value of the controlled variable.

### "Regarding Steering Control Device"

- The steering control device is not limited to the reaction force ECU 70 and the steered-side ECU 90. For example, they may be implemented as a single integrated unit.
- The steering control device is not limited to a device that includes a PU and a storage device and executes software processing. For example, the steering control device may include a dedicated hardware circuit such as an ASIC that executes at least part of the various processes executed in the above embodiments. That is, the control device may include any one of the following processing circuits (a) to (c): (a) a processing circuit including a processing device that executes all of the above processes according to a program and a program storage device such as a storage device storing the program; (b) a processing circuit including a processing device and a program storage device that execute part of the above processes according to a program, and a dedicated hardware circuit that executes the remaining processes; and (c) a processing circuit including a dedicated hardware circuit that executes all of the above processes. A plurality of software execution devices each including a processing device and a program storage device, or a plurality of dedicated hardware circuits, may be provided.

### "Regarding Steered-Side Actuator"

- For example, an actuator in which the steered-side motor 60 is disposed coaxially with the steered shaft 40 may be used as the steered-side actuator At. Alternatively, for example, an actuator connected to the steered shaft 40 via a belt speed reducer using a ball screw mechanism may be used.

While the present disclosure has been described based on embodiments, it is to be understood that the present disclosure is not limited to the embodiments or structures. The present disclosure also includes various alterations and modifications that fall within the scope of equivalence. In addition, various combinations and forms, as well as other combinations and forms that include one element, more elements, or fewer elements, fall within the spirit and scope of the present disclosure.

## Claims

1. A steering control device configured to control a steering device, wherein:
the steering device includes a steering shaft provided with a torsion bar, a steering wheel connected to the steering shaft on a first side relative to the torsion bar, a reaction force motor configured to apply torque to the steering shaft on a second side relative to the torsion bar, the second side being opposite to the first side, and a steered wheel;
the steering control device is configured to execute a target steering wheel angle calculation process, a lower-side angle acquisition process, a steering-side feedback process, a reaction force operation process, and a compensation process in a state in which power transmission between the steering shaft and the steered wheel is cut off;
the target steering wheel angle calculation process is a process of calculating a target steering wheel angle;
the target steering wheel angle is a target value of a steering wheel angle that is a rotation angle of the steering wheel;
the lower-side angle acquisition process is a process of acquiring a lower-side angle that is an angle of the steering shaft on the second side;
the steering-side feedback process is a process of calculating a manipulated variable of feedback control in which the lower-side angle is a controlled variable and the target steering wheel angle is a target value of the controlled variable;
the reaction force operation process is a process of controlling torque of the reaction force motor according to the manipulated variable; and
the compensation process is a process of correcting, by a compensation amount corresponding to a detection value of steering torque detected as a value corresponding to twisting of the torsion bar, the manipulated variable that is an input to the reaction force operation process.

2. The steering control device according to claim 1, wherein:
the steering control device is configured to execute a target lower-side angle calculation process, a steering-side switching process, and a stop process;
the target lower-side angle calculation process is a process of calculating a target lower-side angle that is a target value of the lower-side angle;
the steering-side switching process is a process of switching, by switching an input variable of the steering-side feedback process from the target steering wheel angle to the target lower-side angle, the target value of the controlled variable of the feedback control from the target steering wheel angle to the target lower-side angle; and
the stop process is a process of stopping the compensation process when the input variable of the steering-side feedback process is the target lower-side angle.

3. The steering control device according to claim 1, wherein:
the steering device includes a steered-side motor configured to steer the steered wheel;
the steering control device is configured to execute a target steered-angle-equivalent setting process and a steered-side feedback process;
the target steered-angle-equivalent setting process is a process of setting a target steered-angle-equivalent based on the target steering wheel angle;
the target steered-angle-equivalent is a target value of a steered-angle-equivalent that is a variable indicating a steered angle of the steered wheel; and
the steered-side feedback process is a process of controlling torque of the steered-side motor by a manipulated variable of feedback control in which the steered-angle-equivalent is a controlled variable and the target steered-angle-equivalent is a target value of the controlled variable.

4. The steering control device according to claim 3, wherein:
the steering control device is configured to execute a steered-side switching process; and
the steered-side switching process is a process of switching an input variable of the target steered-angle-equivalent setting process from the target steering wheel angle to the lower-side angle.

5. The steering control device according to claim 1, wherein:
the steering device includes a steered-side motor configured to steer the steered wheel;
the steering control device is configured to execute a correction process, a target steered-angle-equivalent setting process, and a steered-side feedback process;
the correction process is a process of correcting the lower-side angle according to the steering torque;
the target steered-angle-equivalent setting process is a process of setting a target steered-angle-equivalent using, as an input variable, the lower-side angle corrected by the correction process;
the target steered-angle-equivalent is a target value of a steered-angle-equivalent that is a variable indicating a steered angle of the steered wheel; and
the steered-side feedback process is a process of controlling torque of the steered-side motor by a manipulated variable of feedback control in which the steered-angle-equivalent is a controlled variable and the target steered-angle-equivalent is a target value of the controlled variable.

6. The steering control device according to claim 5, wherein:
the steering control device is configured to execute a steered-side switching process; and
the steered-side switching process is a process of switching the input variable of the target steered-angle-equivalent setting process from the lower-side angle corrected by the correction process to the lower-side angle not corrected by the correction process.

7. The steering control device according to claim 2, wherein:
the steering control device is configured to execute an axial force setting process;
the axial force setting process is a process of setting an axial force that is an input to the target steering wheel angle calculation process;
the target steering wheel angle calculation process is a process of calculating the target steering wheel angle according to a predetermined model in accordance with the axial force;
the target lower-side angle calculation process is a process of calculating the target lower-side angle according to the predetermined model for which a value of a defining parameter has been changed according to the axial force; and
the defining parameter is a parameter that defines the predetermined model.

8. A steering control method for controlling a steering device, wherein:
the steering device includes a steering shaft provided with a torsion bar, a steering wheel connected to the steering shaft on a first side relative to the torsion bar, a reaction force motor configured to apply torque to the steering shaft on a second side relative to the torsion bar, the second side being opposite to the first side, and a steered wheel;
the steering control method includes executing a target steering wheel angle calculation process, a lower-side angle acquisition process, a steering-side feedback process, a reaction force operation process, and a compensation process in a state in which power transmission between the steering shaft and the steered wheel is cut off;
the target steering wheel angle calculation process is a process of calculating a target steering wheel angle;
the target steering wheel angle is a target value of a steering wheel angle that is a rotation angle of the steering wheel;
the lower-side angle acquisition process is a process of acquiring a lower-side angle that is an angle of the steering shaft on the second side;
the steering-side feedback process is a process of calculating a manipulated variable of feedback control in which the lower-side angle is a controlled variable and the target steering wheel angle is a target value of the controlled variable;
the reaction force operation process is a process of controlling torque of the reaction force motor according to the manipulated variable; and
the compensation process is a process of correcting, by a compensation amount corresponding to a detection value of steering torque detected as a value corresponding to twisting of the torsion bar, the manipulated variable that is an input to the reaction force operation process.
